# EUROPÄISCHE PATENTSCHRIFT

(11) **EP 1 674 619 B1**
(45) Veröffentlichungstag und Bekanntmachung des Hinweises auf die Patenterteilung: **30.12.2009**
(21) Anmeldenummer: 05016440.9
(22) Anmeldetag: 28.07.2005
(51) Int. Cl.: E02F 9/16, B66C 13/52

(54) **Umschlaggerät**
Transfer device
Appareil de transbordement

(30) Priorität: 21.12.2004 DE 202004019708 U
(43) Veröffentlichungstag der Anmeldung: 28.06.2006
(73) Patentinhaber: Liebherr-Hydraulikbagger GmbH, 88457 Kirchdorf/Iller (DE)
(72) Erfinder: Wager, Bernd, 88457 Kirchdorf (DE); Seifried, Werner, 89075 Ulm (DE); Zitterbart, Thomas, 89165 Dietenheim (DE)
(74) Vertreter: Laufhütte, Dieter

(56) Entgegenhaltungen:
- EP-A2- 0 960 982
- WO-A-79/00118
- WO-A-92/04224
- FR-A- 2 041 682
- JP-A- 2000 319 936
- SU-A1- 844 556

## Beschreibung

Die Erfindung betrifft ein Umschlaggerät nach dem Oberbegriff des Anspruchs 1.

Unter Umschlaggeräten sind in diesem Zusammenhang Umschlaggeräte beispielsweise für Holz, Schrott oder beliebige andere Güter, aber auch Bagger und Kräne zu verstehen. Bei derartigen Umschlaggeräten ist es bereits bekannt, die Fahrerkabine höhenverstellbar vorzusehen, um eine verbesserte Sicht über den Arbeitsbereich, beispielsweise Ladeluken, Eisenbahnwaggons oder ähnliches zu ermöglichen. Durch die höhere Sitzposition kann der Fahrer präzisere und schnellere Arbeitsspiele durchführen.

Die beschriebenen Kabinenerhöhungen können von starrer Bauart sein bzw. über Arme und Stellglieder in eine höhere Position gebracht werden.

So ist beispielsweise aus der DE 42 25 948 A1 eine mobile Lademaschine bekannt, deren Kabine aus einer der Maschinenbasis nahen Ausgangsstellung mittels an ihrem Sockel gelagerter Parallellenker angehoben werden kann. Bei dieser Verstellvorrichtung erstreckt sich in der Ausgangsstellung das am Kabinensockel angreifende Lenkerpaar rückwärtig bis zu einem erhöhten festen Anschluss am Oberwagen und läßt sich mit Hilfe eines Antriebszylinders zusammen mit der Kabine entlang eines Kreisbogens anheben.

Aus der DE 26 31 578 C3 ist eine Kabinen-Verstellvorrichtung einer Arbeitsmaschine bekannt, bei der zur Höhenverstellung einer Kabine auf der einen Seite am Kabinensockel und auf der anderen Seite an einer hinter der Kabine angeordneten Säule angelenktes Parallellenkergetriebe vorgesehen ist. Die drehbare Säule ist sehr dicht hinter dem vorderen Kabinenplatz angeordnet, damit die Kabine in Ihrer durch Verdrehen der Säule um deren vertikalen Achse erreichbaren rückwärtsweisenden Stellung wenigstens noch teilweise über dem Fahrzeug verbleibt.

Zusätzlich zu einer solchen oberhalb der Maschinenbasis verbleibenden Höhenverstellung der Kabine besteht häufig der Bedarf, die Kabine in Richtung des Auslegers weiter nach vorne zu bewegen.

Um dies zu erreichen, ist entsprechend der DE 44 43 170 C2 der Ausleger aus zwei aneinander gekoppelten Hubgerüsten gebildet, die an deren vorderen Ende ein Tragstück zur Aufnahme eines Fahrerhauses aufweisen. Die Hubgerüste bestehen entsprechend dieser Schrift aus zwei Parallellenkergetrieben, die mittig über ein Verbindungsblech schwenkbar zueinander angeordnet sind. Die Verschwenkung erfolgt durch entsprechende Kolben-Zylinderanordnungen an den Parallellenkergetrieben.

Auch aus der EP 0 960 982 B1 ist es bereits bekannt, die Fahrerkabine eines Umschlaggerätes bzw. einer Arbeitsmaschine über zwei zueinander schwenkbare Parallellenkergetriebe, die über Kolben-Zylinderanordnungen antreibbar sind, zu verschwenken.

Die vorgenannten Lehren weisen folgende Nachteile auf. Zum einen weisen die verfahrbaren Ausleger viele Lagerstellen auf und sie beinhalten eine Vielzahl von Einzelteilen, die bearbeitet werden müssen. Hierdurch ist der Gesamtaufbau der Ausleger komplex und kostenaufwendig.

Andererseits ist der Schwenkwinkel der Parallellenkergetriebe und somit der Arbeitsbereich der Kabinenerhöhung begrenzt.

Die Druckschrift FR-A-2 041 682 zeigt ein Umschlaggerät mit einer Fahrerkabine, die an einem Tragarm mit einer Achse auf einem Ausleger hängend angeordnet ist. Jedoch offenbart diese Schrift keine Stelleinrichtung, mittels derer die Fahrerkabine aus der waagrechten Position nach vorne oder hinten verschwenkt werden kann.

Aufgabe der vorliegenden Erfindung ist es, ein Umschlaggerät mit einer entsprechend höhenverstellbaren Fahrerkabine nach dem Oberbegriff des Anspruchs 1 zur Verfügung zu stellen, welche möglichst flexibel positionierbar sein soll, wobei die Gesamtkonstruktion möglichst einfach ausgeführt sein soll.

Erfindungsgemäß wird diese Aufgabe durch die Gesamtheit der Merkmale des Anspruchs 1 gelöst.

Entsprechend der erfindungsgemäßen Lösung wird die Fahrerkabine am freien Ende des Auslegers hängend angeordnet und wird eine Stelleinrichtung vorgesehen, mittels derer die Fahrerkabine aus der waagrechten Position in eine nach vorne oder hinten geneigte Position gebracht werden kann.

Hierdurch kann eine sehr einfache Konstruktion realisiert werden, die einerseits sehr robust ausgeführt ist und andererseits eine flexible Verfahrbarkeit der Fahrerkabine zuläßt.

Bevorzugte Ausgestaltungen der Erfindung ergeben sich aus den sich an den Hauptanspruch anschließenden Unteransprüchen.

Demnach kann der Ausleger aus mindestens zwei gelenkig miteinander verbundenen Armen und entsprechend zugeordneten Stellgliedern bestehen.

Besonders vorteilhaft wird die Fahrerkabine oberhalb ihres Schwerpunktes aufgehängt. Damit ist sichergestellt, dass sie sich bei Verschwenken des Auslegers immer wieder in die gleiche Ausgangsposition bewegt.

Gemäß einer besonderen Ausgestaltung der Erfindung kann zwischen der Fahrerkabine bzw. einer diese tragenden Tragkonstruktion und dem Anlenkpunkt am Ausleger eine Stellvorrichtung zum Verschwenken der Fahrerkabine angeordnet sein.

Dieses Stellglied ist insbesondere dann von Vorteil, wenn die Fahrerkabine unterhalb ihres Schwerpunktes aufgehängt ist. Hier kann beim Verschwenken des Auslegers die Fahrerkabine in ihrer Lage durch das Stellglied nachgeführt werden.

Um die Flexibilität der Fahrerkabineneinstellung zu erhöhen, kann der Ausleger einen oder mehrere teleskopierbare Arme aufweisen.

Die Fahrerkabine kann über geeignete Getriebe mittels Formschluss zwangsweise parallel oder unter einem bestimmten Winkel zum Untergrund geführt werden.

Als Getriebe können hierbei Zahnriemen, Kettengetriebe oder Zahnräder eingesetzt werden.

Der Ausleger kann zwei schwenkbar miteinander verbundene Parallellenkergetriebe als entsprechende Getriebemittel aufweisen.

Die Arme des Auslegers sind üblicherweise gerade ausgeführt. Sie können aber auch gebogen ausgeführt sein.

Besonders vorteilhaft sind die Arme des Auslegers als geschlossene Kastenprofile ausgebildet. Hierdurch wird eine hohe Torsions- und Biegesteifigkeit gewährleistet.

Die Arme können in ihrem Inneren ein oder mehrere Hohlprofile aufweisen, um darin die erforderlichen Kabel und Schläuche zum Fahrerkabinensystem aufnehmen zu können.

Der Ausleger kann über einen drehbar auf dem Umschlaggerät angeordneten Lagerbock gegenüber dem Umschlaggerät drehbar sein. Die Arme des Auslegers können über zusätzliche Umlenkhebel mittels an diesen angreifenden Stellgliedern bewegt werden. Dadurch ergeben sich größere Schwenkwinkel sowie die Möglichkeit, den verfahrbaren Ausleger kompakt zusammenzufalten.

Die Fahrerkabine kann selbsttragend ausgeführt sein. Sie kann aber auch aus einer Tragstruktur und einer in dieser gehaltenen Kabine bestehen.

Vorteilhaft ist die Fahrerkabine gedämpft aufgehängt, wobei die Dämpfung abhängig von der Schwenkbeschleunigung und -verzögerung erfolgt.

Weitere Merkmale, Einzelheiten und Vorteile der Erfindung ergeben sich aus der folgenden Beschreibung der anhand der Figuren dargestellten Ausführungsbeispiele. Es zeigen:
- Figur 1:: eine erste Ausführungsform eines erfindungsgemäßen Umschlaggeräts,
- Figur 2 u. 3:: das Umschlaggerät gemäß Figur 1 in anderen Arbeitsstellungen,
- Figur 4:: eine Teildarstellung eines erfindungsgemäßen Umschlaggeräts gemäß einer weiteren Ausführungsvariante,
- Figur 5:: eine dritte Ausführungsvariante eines erfindungsgemäßen Umschlaggeräts in Detailldarstellung von der Seite und von oben,
- Figur 6:: eine vierte Variante des erfindungsgemäßen Umschlaggeräts und
- Figur 7:: eine fünfte alternative Ausführungsform des erfindungsgemäßen Umschlaggeräts.

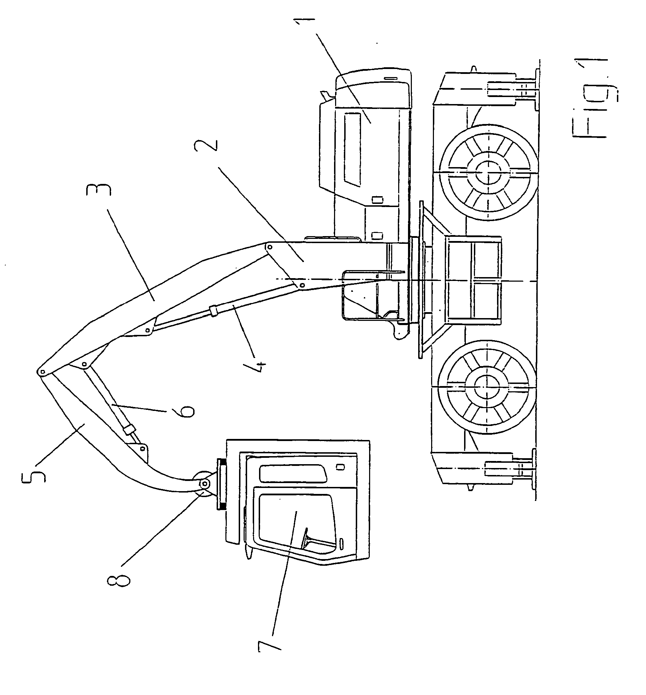

In der Figur 1 ist ein Umschlaggerät mit einem Oberwagen 1 gezeigt, auf welchem ein Lagerteil 2 befestigt ist. Das Lagerteil 2 ist mit Anlenkstellen für einen ersten Arm 3 eines Auslegers sowie für ein oder mehrere erste Stellglieder 4 versehen.

Der erste Arm 3 ist ebenfalls mit Anlenkstellen für das Lagerteil 2 und für das erste Stellglied versehen. Zusätzlich sind am ersten Arm zusätzliche Lagerstellen für einen zweiten Arm 5 und ein oder mehrere zweite Stellglieder 6 vorgesehen. Die Stellglieder sind im hier dargestellten Ausführungsbeispiel Kolben-Zylinderanordnungen 4 und 6.

Das Lagerteil 2, der erste Arm 3 sowie das oder die ersten Stellglieder 4 bilden ein erstes Viergelenkgetriebe, während der erste Arm 3, der zweite Arm 5 und das oder die zweiten Stellglieder 6 ein zweites Viergelenkgetriebe bilden.

Am Ende des zweiten Armes 5 ist hängend ein Fahrerkabinensystem 7 angeordnet. Durch die Verstellung der Stellglieder 4 und 6 kann das Fahrerkabinensystem 7 innerhalb des von der Kinematik vorgegebenen Verstellbereichs in jede Position gebracht und dort gehalten werden.

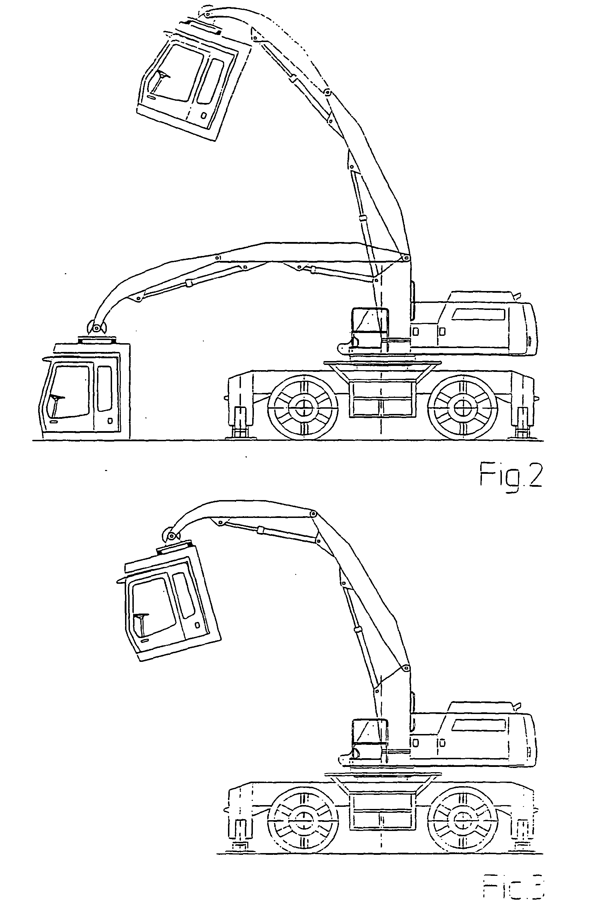

So kann der Fahrer beispielsweise zu ebener Erde das Fahrerkabinensystem 7 betreten und für die anstehende Arbeit in eine optimale Sichtposition bringen, wie dies anhand der Figur 2 anhand der beiden dort dargestellten Stellungen des Fahrerkabinensystems 7 gezeigt ist. Bei entsprechender Gestaltung des Oberwagens kann das Fahrerkabinensystem 7 auch in Höhe des Oberwagens positioniert werden, so daß der Fahrer durch eine beispielsweise im hinteren Bereich der Kabine angeordnete Tür unmittelbar auf den Oberwagen gelangt, wo er beispielsweise Einstellarbeiten am Motor vornehmen kann.

Das Fahrerkabinensystem 7 wird oberhalb dessen Schwerpunkt aufgehängt, beispielsweise im Dachbereich, so daß sich aufgrund der Schwerkraft stets ein stabiler Gleichgewichtszustand einstellt. Wird das Kabinensystem unterhalb des Schwerpunktes angelenkt (hier nicht dargestellt), so sorgt ein Stellglied 8 für die automatische Kabinennachführung, wobei hier eine Neigungskontrolle durchgeführt wird.

Des weiteren ist es möglich, die Kabine aus seiner üblicherweise waagerechten Position mittels der Stelleinrichtung 8 in eine nach vorne oder hinten geneigte Position zu bringen. Dadurch ergeben sich nochmals bessere und ergonomischere Sichtverhältnisse für den Fahrer, da der Hals des Fahrers beispielsweise für die Sicht nach weit oben (Befüllen eines Silos) nicht überstreckt werden muß. Entsprechende Stellungen der Kabine sind in den Figuren 2 und 3 der ersten Ausführungsform der Erfindung gezeigt.

Das Fahrerkabinensystem 7 kann eine kardanische oder eine um alle 6 Achsen dämpfende Befestigung aufweisen, um die Belastungen für den Fahrer zu minimieren. Vorteilhafterweise kann die Fahrerkabine auch noch um ihre Hochachse gedreht werden. Weiter kann die Fahrerkabine in Richtung der Fahrzeuglängsachse mittels geeigneter Führungselement nach vorne und hinten verschoben werden, wenn dies vorgesehen ist (hier nicht dargestellt).

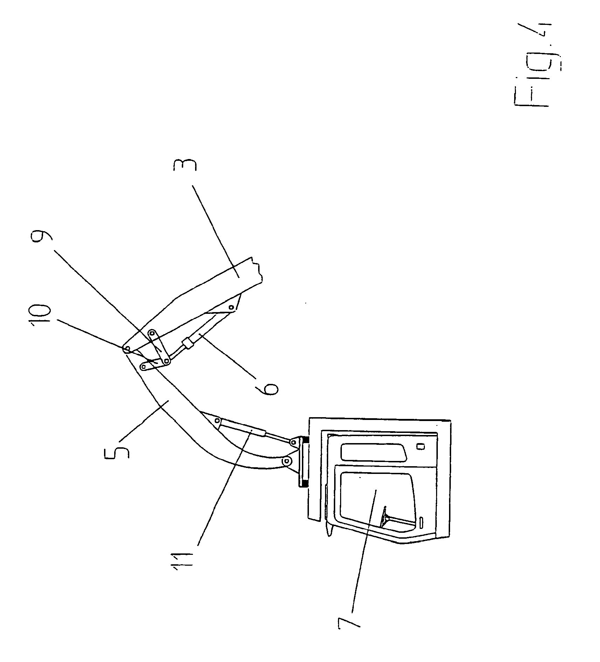

Die Stelleinrichtung 8 ist in der Lage, die Neigungsverstellung des Kabinensystems 7 sicherzustellen. Wird das Kabinensystem in eine bestimmte Lage bewegt, läßt die Stelleinrichtung 8 die freie oder gedämpfte Bewegung des Fahrerkabinensystems 7 zu. Ist die Stellbewegung zu Ende, so sorgt die Stelleinrichtung 8 für einen sicheren und festen Halt des Kabinensystems 7 in der gewünschten Position und Neigung. Die Stelleinrichtung kann beispielsweise neben einem Hydraulikmotor mit Getriebe auch ein Hydraulikzylinder 11 sein, wie das anhand des Ausführungsbeispiels gemäß Figur 4 gezeigt ist. Ebenfalls denkbar sind elektrisch oder pneumatisch angetriebene Stellglieder (hier nicht dargestellt). In dem Ausführungsbeispiel gemäß Figur 4 sind auch die Arme 3 und 5 des Auslegers mit zusätzlichen Umlenkhebeln 9 und 10 ausgestattet, die über die Stellglieder 4 und 6 bewegbar sind. Dadurch ergeben sich größere Schwenkwinkel sowie die Möglichkeit, den Kabinenlift kompakt zusammenzufalten.

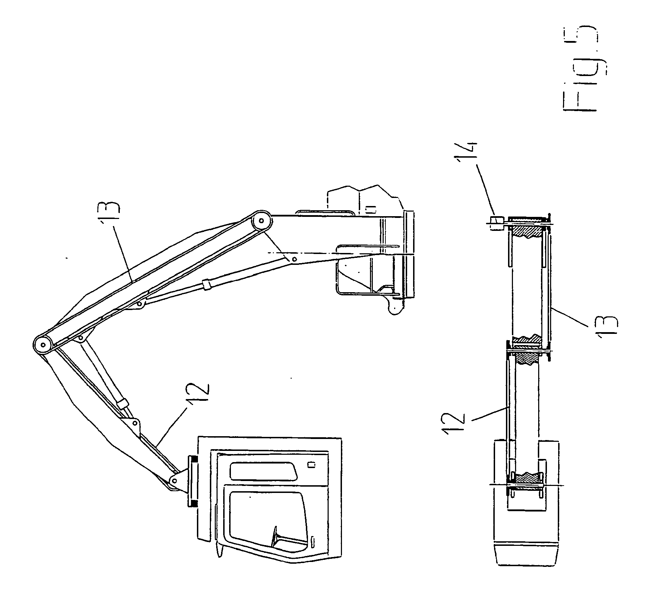

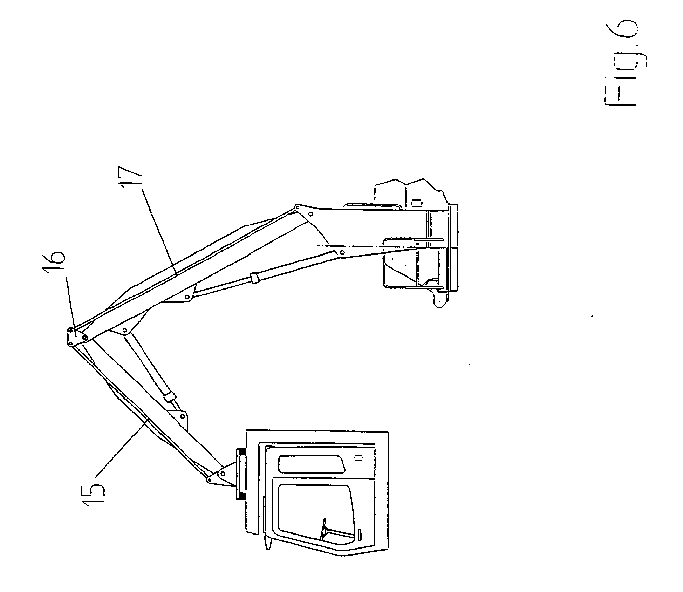

Anhand der Ausführungsvarianten in den Figuren 5 und 6 werden Systeme gezeigt, mittels der eine Parallelführung des Fahrerkabinensystems 7 sichergestellt ist.

So wird in der Figur 5 bereits gezeigt, dass über ein Getriebe in Form eines Ketten- oder Riementriebs 12 bzw. 13, der jeweils mindestens aus zwei Ketten- oder Riemenrädem sowie einer Kette oder einem Riemen besteht, eine entsprechende Parallelführung geschaffen werden kann. Das der Kabine zugewandte Ketten- oder Riemenrad ist fest mit dem Fahrerkabinensystem 7 verbunden. Im Gelenk zwischen dem Arm 3 und dem Arm 5 ist eine Welle mit zwei mit der Welle verbundenen Ketten- oder Riemenrädern gelagert. Dadurch gibt es eine formschlüssige Verbindung für den Ketten- oder Riementrieb 12. Das zweite Ketten- oder Riemenrad auf der Welle zwischen dem Arm 3 und dem Arm 5 bildet mit mindestens einem weiteren Rad den zweiten Ketten- oder Riementrieb 13. Die Welle zwischen den Teilen 2 und 3 wird zunächst festgehalten. Beim Verfahren der Kolben-Zylindereinheiten 4 und 6 bleibt die Kabine auf diese Weise immer wagerecht sofern die Übersetzungsverhältnisse des Zahn- oder Riementriebs gleich eins sind. Über Variation der Übersetzungsverhältnisse in den Zahn- und Riementrieben kann so automatisch auch eine von der waagerechten abweichende Position des Fahrerkabinensystems 7 realisiert werden. Weiterhin besteht die Möglichkeit, über einen Einstellantrieb 14 (vgl. Figur 5) das Fahrerkabinensystem aus der waagerechten Position zu steuern.

In der Ausführungsvariante gemäß Figur 6 ist eine andere Möglichkeit für eine Kabinenparallelführung gezeigt. Das Fahrerkabinensystem 7 sowie das Lagerteil 2 sind mit jeweils einem zusätzlichen Drehpunkt ausgestattet. Die hier dargestellten Streben 15 und 17 sowie der zwischen diesen angeordnete Umlenkhebel 16 bilden mit den zusätzlichen Lagerstellen zwei Parallelogramme. Hier wird also der Ausleger mit zwei Parallellenkergetrieben versehen. Bei dieser hier in der Figur 6 gezeigten Lösung wird das Fahrerkabinensystem 7 im oder nahe seinem Schwerpunkt gelagert. Die Kabinenlast wird alleine von den Armen 3 und 5 sowie den Stellgliedern 4 und 6 getragen. Die Parallellenkergetriebe übernehmen wesentlich geringere Belastung, da nur eine Haltefunktion gewährleistet werden soll.

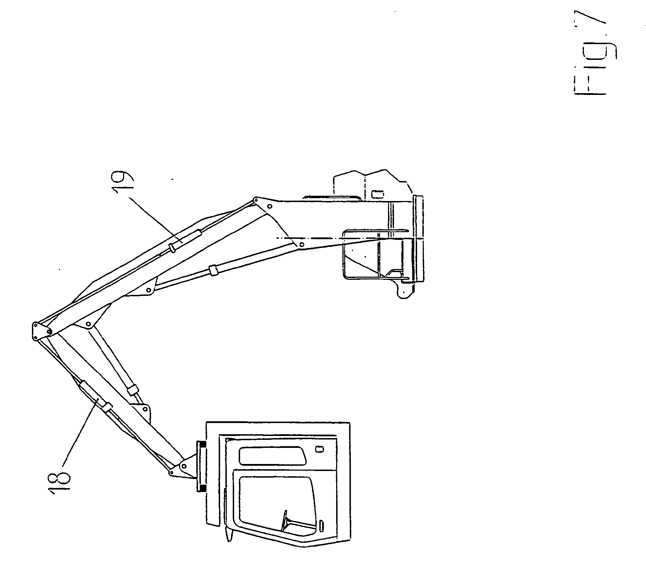

Schließlich zeigt die Figur 7 noch eine weitere Ausführungsform der Erfindung, in welcher die Streben 18 und 19 in ihrer Länge verstellbar sind. Dies kann fest oder variabel über geeignete Stellglieder geschehen. Damit läßt sich die Kabine im Unterschied zu der Ausgestaltung der Figur 6 in eine Position außerhalb der Waagerechten fahren.

## Patentansprüche

1. Umschlaggerät mit einer an einem beweglichen und verfahrbaren Ausleger angelenkten Fahrerkabine (7),
**dadurch gekennzeichnet,**
**daß** die Fahrerkabine (7) am freien Ende des Auslegers hängend angeordnet ist und dass eine Stelleinrichtung (8) vorgesehen ist, mittels derer die Fahrerkabine (7) aus der waagrechten Position in eine nach vorne oder hinten geneigte Position gebracht werden kann.

2. Umschlaggerät nach dem vorhergehenden Anspruch, **dadurch gekennzeichnet, daß** der Ausleger aus mindestens zwei gelenkig miteinander verbundenen Armen (3, 5) und entsprechend zugeordneten Stellgliedern (4, 6) besteht.

3. Umschlaggerät nach einem der vorhergehenden Ansprüche, **dadurch gekennzeichnet, daß** die Fahrerkabine (7) oberhalb ihres Schwerpunktes aufgehängt ist.

4. Umschlaggerät nach einem der vorhergehenden Ansprüche, **dadurch gekennzeichnet, daß** zwischen der Fahrerkabine (7) bzw. einer diese tragenden Tragkonstruktion und dem Anlenkpunkt am Ausleger die Stellvorrichtung (8) zum Verschwenken der Fahrerkabine angeordnet ist.

5. Umschlaggerät nach einem der vorhergehenden Ansprüche, **dadurch gekennzeichnet, daß** das Stellglied (4, 6) im Falle der Aufhängung der Fahrerkabine (7) unterhalb ihres Schwerpunktes beim Verschwenken des Auslegers die Fahrerkabine (7) in ihrer Lage nachführt.

6. Umschlaggerät nach einem der vorhergehenden Ansprüche, **dadurch gekennzeichnet, daß** der Ausleger einen oder mehrere teleskopisierbare Arme aufweisen kann.

7. Umschlaggerät nach einem der vorhergehenden Ansprüche, **dadurch gekennzeichnet, daß** die Fahrerkabine über geeignete Getriebe mittels Formschluß zwangsweise parallel oder unter einem bestimmten Winkel zum Untergrund geführt wird.

8. Umschlaggerät nach dem Anspruch 7, **dadurch gekennzeichnet, daß** als Getriebe Zahnriemen (12,13), Kettentriebe (12,13) oder Zahnräder eingesetzt werden.

9. Umschlaggerät nach einem der vorhergehenden Ansprüche, **dadurch gekennzeichnet, daß** der Ausleger zwei schwenkbar miteinander verbundene Parallelenkergetriebe aufweist.

10. Umschlaggerät nach einem der vorhergehenden Ansprüche, **dadurch gekennzeichnet, daß** die Arme (3, 5) des Auslegers gebogen ausgeführt sind.

11. Umschlaggerät nach einem der vorhergehenden Ansprüche, **dadurch gekennzeichnet, daß** die Arme (3, 5) des Auslegers als geschlossene Kastenprofile ausgebildet sind.

12. Umschlaggerät nach einem der vorhergehenden Ansprüche, **dadurch gekennzeichnet, daß** die Arme (3, 5) in ihrem Inneren mindestens ein Hohlprofil zur Aufnahme der zur Fahrerkabine (7) laufenden Kabel oder Schläuche aufweisen.

13. Umschlaggerät nach einem der vorhergehenden Ansprüche, **dadurch gekennzeichnet, daß** der Ausleger über einen drehbar auf dem Umschlaggerät angeordneten Lagerbock gegenüber dem Umschlaggerät drehbar ist.

14. Umschlaggerät nach einem der vorhergehenden Ansprüche, **dadurch gekennzeichnet, daß** an den Armen (3, 5) des Auslegers zusätzliche Umlenkhebel (16) angeordnet sind, an denen die Stellglieder angreifen.

15. Umschlaggerät nach einem der vorhergehenden Ansprüche, **dadurch gekennzeichnet, daß** die Fahrerkabine (7) selbsttragend ausgeführt ist.

16. Umschlaggerät nach einem der vorhergehenden Ansprüche, **dadurch gekennzeichnet, daß** die Fahrerkabine (7) aus einer Tragstruktur und einer in dieser gehaltenen Kabine besteht.

17. Umschlaggerät nach einem der vorhergehenden Ansprüche, **dadurch gekennzeichnet, daß** die Fahrerkabine (7) gedämpft aufgehängt ist, wobei die Dämpfung abhängig von der Schwenkbeschleunigung und -verzögerung erfolgt.

18. Umschlaggerät nach einem der vorhergehenden Ansprüche, **dadurch gekennzeichnet, daß** die Fahrerkabine (7) über einen Einstellantrieb (14) aus der waagrechten Position in eine gewünschte gekippte Position verfahrbar ist.

## Claims

1. A transfer apparatus comprising an operator cabin (7) articulated at a movable and travelable boom,
**characterized in that**
the operator cabin (7) is arranged in a suspended manner at the free end of the boom and that a positioning device (8) is provided by means of which the operator cabin (7) can be brought from the horizontal position into a position inclined to the front or to the rear.

2. A transfer apparatus in accordance with the preceding claim, wherein the boom consists of at least two arms (3, 5) connected to one another in an articulated manner and correspondingly associated actuators (4, 6).

3. A transfer apparatus in accordance with any one of the preceding claims, wherein the operator cabin (7) is suspended above its center of gravity.

4. A transfer apparatus in accordance with any one of the preceding claims, wherein the positioning device (8) is arranged between the operator cabin (7) or a support construction supporting it and the pivot point at the boom for the pivoting of the operator cabin.

5. A transfer apparatus in accordance with any one of the preceding claims, wherein the actuator (4, 6) tracks the position of the operator cabin (7) on the pivoting of the boom in the case of the suspension of the operator cabin (7) beneath its center of gravity.

6. A transfer apparatus in accordance with any one of the preceding claims, wherein the boom can have one or more telescopic arms.

7. A transfer apparatus in accordance with any one of the preceding claims, wherein the operator cabin is guided in a compulsory manner parallel to the ground or at a specific angle to the ground via suitable transmissions by means of a shape-matched connection.

8. A transfer apparatus in accordance with claim 7, wherein toothed belts (12, 13), chain drives (12, 13) or toothed wheels are used as the transmission.

9. A transfer apparatus in accordance with any one of the preceding claims, wherein the boom has two parallel connecting rod transmissions pivotably connected to one another.

10. A transfer apparatus in accordance with any one of the preceding claims, wherein the arms (3, 5) of the boom are curved.

11. A transfer apparatus in accordance with any one of the preceding claims, wherein the arms (3, 5) of the boom are made as closed box sections.

12. A transfer apparatus in accordance with any one of the preceding claims, wherein the arms (3, 5) have at least one hollow section at their interior for the accommodation of the cables or hoses running to the operator cabin (7).

13. A transfer apparatus in accordance with any one of the preceding claims, wherein the boom is rotatable with respect to the transfer apparatus via a pedestal arranged rotatably on the transfer apparatus.

14. A transfer apparatus in accordance with any one of the preceding claims, wherein additional relay arms (16) at which the actuators engage are arranged at the arms (3, 5) of the boom.

15. A transfer apparatus in accordance with any one of the preceding claims, wherein the operator cabin (7) is made in a self-supporting manner.

16. A transfer apparatus in accordance with any one of the preceding claims, wherein the operator cabin (7) consists of a support structure and of a cabin held therein.

17. A transfer apparatus in accordance with any one of the preceding claims, wherein the operator cabin (7) is suspended in a damped manner, with the damping taking place in dependence on the pivot acceleration and pivot delay.

18. A transfer apparatus in accordance with any one of the preceding claims, wherein the operator cabin (7) is movable out of the horizontal position into a desired tilted position via an adjustment drive (14).

## Revendications

1. Appareil de transbordement avec une cabine de conducteur (7) articulée à une flèche mobile et déplaçable,
**caractérisé en ce que**
la cabine de conducteur (7) est disposée à l'extrémité libre de la flèche, en étant suspendue, et **en ce qu'**une installation de positionnement (8) est prévue au moyen de laquelle la cabine de conducteur (7) peut être amenée de la position horizontale dans une position inclinée vers l'avant ou vers l'arrière.

2. Appareil de transbordement selon la revendication précédente, **caractérisé en ce que** la flèche est constituée d'au moins deux bras (3, 5) articulés l'un à l'autre et d'organes de positionnement (4, 6) associés d'une manière correspondante.

3. Appareil de transbordement selon l'une des revendications précédentes, **caractérisé en ce que** la cabine de conducteur (7) est accrochée au-dessus de son centre de gravité.

4. Appareil de transbordement selon l'une des revendications précédentes, **caractérisé en ce qu'**il est disposé entre la cabine de conducteur (7) respectivement une construction de support supportant celle-ci et le point d'articulation à la flèche le dispositif de positionnement (8) pour le pivotement de la cabine de conducteur.

5. Appareil de transbordement selon l'une des revendications précédentes, **caractérisé en ce que** l'organe de positionnement (4, 6), dans le cas de la suspension de la cabine de conducteur (7) en dessous de son centre de gravité, lors du pivotement de la flèche, réalise une poursuite de la cabine de conducteur (7) dans sa position.

6. Appareil de transbordement selon l'une des revendications précédentes, **caractérisé en ce que** la flèche peut présenter un ou plusieurs bras télescopiques.

7. Appareil de transbordement selon l'une des revendications précédentes, **caractérisé en ce que** la cabine de conducteur est guidée par des engrenages appropriés, par concordance des formes, par force d'une manière parallèle ou sous un angle défini au sol.

8. Appareil de transbordement selon la revendication 7, **caractérisé en ce que**, comme engrenages, des courroies dentées (12, 13), des entraînements à chaîne (12, 13) ou des roues dentées sont utilisées.

9. Appareil de transbordement selon l'une des revendications précédentes, **caractérisé en ce que** la flèche présente deux mécanismes à bielles parallèles reliés d'une manière pivotante l'un à l'autre.

10. Appareil de transbordement selon l'une des revendications précédentes, **caractérisé en ce que** les bras (3, 5) de la flèche sont courbés.

11. Appareil de transbordement selon l'une des revendications précédentes, **caractérisé en ce que** les bras (3, 5) de la flèche sont réalisés comme profilés de caisson fermés.

12. Appareil de transbordement selon l'une des revendications précédentes, **caractérisé en ce que** les bras (3, 5) présentent dans leur intérieur au moins un profilé creux pour la réception des câbles ou tuyaux souples menant à la cabine de conducteur (7).

13. Appareil de transbordement selon l'une des revendications précédentes, **caractérisé en ce que** la flèche peut tourner par un palier disposé d'une manière tournante sur l'appareil de transbordement par rapport à l'appareil de transbordement.

14. Appareil de transbordement selon l'une des revendications précédentes, **caractérisé en ce que** sont disposés aux bras (3, 5) de la flèche additionnellement des leviers de renvoi (16) auxquels s'appliquent les organes de positionnement.

15. Appareil de transbordement selon l'une des revendications précédentes, **caractérisé en ce que** la cabine de conducteur (7) est auto-porteuse.

16. Appareil de transbordement selon l'une des revendications précédentes, **caractérisé en ce que** la cabine de conducteur (7) est constituée d'une structure de support et d'une cabine retenue dans celle-ci.

17. Appareil de transbordement selon l'une des revendications précédentes, **caractérisé en ce que** la cabine de conducteur (7) est accrochée avec un amortissement, où l'amortissement a lieu en fonction de l'accélération et du retardement du pivotement.

18. Appareil de transbordement selon l'une des revendications précédentes, **caractérisé en ce que** la cabine de conducteur (7) est déplaçable par une commande de réglage (14) de la position horizontale dans une position basculée souhaitée.
